# EUROPÄISCHE PATENTSCHRIFT

(11) **EP 3 482 934 B1**
(45) Veröffentlichungstag und Bekanntmachung des Hinweises auf die Patenterteilung: **30.06.2021**
(21) Anmeldenummer: 17201058.9
(22) Anmeldetag: 10.11.2017
(51) Int. Cl.: B33Y 30/00, B33Y 40/00, B29C 64/214, B29C 64/209, B29C 64/30, B29C 64/245, B29C 64/227

(54) **3D-SIEBDRUCKSYSTEM ZUM DRUCKEN DREIDIMENSIONAL GEFORMTER STRUKTUREN**
3D SCREEN PRINTING SYSTEM FOR PRINTING THREE DIMENSIONALLY SHAPED STRUCTURES
SYSTÈME DE SÉRIGRAPHIE 3D PERMETTANT D'IMPRIMER DES STRUCTURES TRIDIMENSIONNELLES

(43) Veröffentlichungstag der Anmeldung: 15.05.2019
(73) Patentinhaber: Exentis Group AG, 5608 Stetten (AG) (CH); Ekra Automatisierungssysteme GmbH, 74357 Bönnigheim (DE)
(72) Erfinder: Plachy, Franz, 74336 Brackenheim (DE); Reinisch, Hubert, 71691 Freiberg am Neckar (DE); Vasic, Srdan, 8810 Horgen (CH); Engel, Markus, 84416 Moosen/ Vils (DE)
(74) Vertreter: Clarenbach, Carl-Philipp

(56) Entgegenhaltungen:
- EP-A1- 0 270 485
- EP-A1- 2 305 467
- WO-A1-2016/095059
- DE-A1- 19 936 572
- US-A1- 2009 177 309

## Beschreibung

Die Erfindung betrifft ein Drucksystem zum Drucken dreidimensional geformter Strukturen auf Substraten, insbesondere Leiterplatten, Wafer, Solarzellen, Trägersubstrate, Drucktische, Trägerplatten, Sinterplatten oder dergleichen, mit zumindest einer Druckvorrichtung, die einen Druckkopf aufweist, der eine Rakeleinrichtung und eine der Rakeleinrichtung zugeordnete Siebaufnahme zur Aufnahme eines Drucksiebs aufweist. Es handelt sich insbesondere um ein 3D-Siebdrucksystem zum Drucken dreidimensional geformter Strukturen.

Drucksysteme der eingangs genannten Art sind aus dem Stand der Technik bekannt. 3D-Druckverfahren erfreuen sich einer immer größer werdenden Beliebtheit, weil durch diese in kurzer Zeit kostengünstig komplexe dreidimensionale Strukturen gefertigt werden können, wobei derartige Druckverfahren nicht nur auf Prototypen beschränkt sind, sondern mittlerweile auch auf die Herstellung fertiger Produkte angewendet werden. Dabei kommen unterschiedliche Techniken zum Einsatz. Häufig werden dabei Laser-Geräte zum schichtweisen Formen von Kunststoffstrukturen eingesetzt. Für die Herstellung elektrisch leitfähiger Strukturen aus metallischen Werkstoffen ist es außerdem bekannt, Siebdruckverfahren durchzuführen. Dazu wird auf ein Drucksieb eine Druckmasse in fließfähiger Form aufgebracht, die mittels eines Rakels einer Rakeleinrichtung durch das Sieb hindurch auf ein Substrat gepresst wird. Aus der Offenlegungsschrift DE 20 2013 004 745 U1 ist außerdem bereits eine Anlage zur Herstellung von dreidimensionalen Siebdrucken bekannt.

Aus der Offenlegungsschrift WO 2016/095059 A1 ist außerdem eine Vorrichtung zur Herstellung eines Formkörpers aus zumindest einer Formkörperschicht bekannt, wobei die Vorrichtung einen Schichtträger zur Aufnahme der mindestens einen Formkörperschicht aufweist, eine Druckplatte und ein formgebendes Werkzeug, durch welches die Formkörperschicht mit einer definierten Form auf die Druckplatte auftragbar ist. Außerdem weist die Vorrichtung ein Magazin zur Aufbewahrung von Druckschablonen auf.

Der Erfindung liegt die Aufgabe zugrunde, ein verbessertes Drucksystem zu schaffen, mittels welchem auch komplexe dreidimensionale Strukturen einfach und zeitnah hergestellt werden können.

Die der Erfindung zugrundeliegende Aufgabe wird durch ein Drucksystem mit den Merkmalen des Anspruchs 1 gelöst. Dieses hat den Vorteil, dass eine komplexe dreidimensionale Struktur gefertigt werden kann, ohne dass hierzu mehrere Druckvorrichtungen notwendig sind, und ohne dass das die Struktur tragende Substrat zum Herstellen der vollständigen Struktur aus einer Druckvorrichtung entnommen und in einer anderen Druckvorrichtung eingefügt werden muss. Dadurch wird die Herstellungszeit verkürzt und Ressourcen, insbesondere auch in Bezug auf den für die Herstellung notwendigen Raum eingespart. Erfindungsgemäß wird dies dadurch erreicht, dass das Drucksystem eine Siebbereitstellungsvorrichtung aufweist, die ein Siebmagazin zur Aufbewahrung mehrerer Drucksiebe und eine Transporteinrichtung zum Transportieren eines Drucksiebs von der Siebaufnahme zu dem Siebmagazin einerseits und eines ausgewählten Drucksiebs aus dem Siebmagazin zu der Siebaufnahme andererseits aufweist. Die Druckvorrichtung ist somit dazu in der Lage, aus einem Siebmagazin unterschiedliche Drucksiebe auszuwählen und dem Druckvorgang zugrunde zu legen, wodurch mithilfe unterschiedlich gestalteter Drucksiebe in einfacher Art und Weise mit derselben Druckvorrichtung unterschiedliche und hochkomplexe dreidimensionale Strukturen gedruckt werden können. Mittels der Transporteinrichtung wird dazu beispielsweise zuerst ein ausgewähltes Drucksieb aus dem Siebmagazin entnommen, in der Siebaufhahme angeordnet, und ein erster Druckvorgang ausgeführt. Anschließend wird das Drucksieb aus der Siebaufnahme entfernt und wieder dem Siebmagazin zugeführt, sodass im zweiten Schritt die Transporteinrichtung ein zweites Drucksieb aus dem Siebmagazin entnimmt und in der Siebaufnahme anordnet. Der darauffolgende zweite Druckvorgang trägt eine zweite Druckschicht auf, die sich beispielsweise aufgrund der Gestaltung des Drucksiebs von der ersten Druckschicht unterscheidet, sodass dreidimensional geformte Strukturen entstehen. Dabei ist die Anzahl der Druckschichten frei wählbar und auch deren Höhe kann variabel sein. Selbstverständlich können auch zwei oder mehr Druckvorgänge mit ein und demselben Drucksieb direkt hintereinander durchgeführt werden.

Damit der Abstand zwischen Drucksieb und Substrat während eines Druckvorgangs möglichst gering ist, sind vorzugsweise der das Substrat tragende Drucktisch und/oder der Druckkopf in der Höhe verstellbar, um den Abstand zwischen Drucksieb und Drucktisch variieren können.

Durch Vergrößern der Höhe nach jedem Druckvorgang können somit in einfacher Art und Weise die Drucklagen aufeinander geschichtet werden.

Weiterhin ist bevorzugt vorgesehen, dass die Transporteinrichtung an dem Drucktisch oder an einem den Drucktisch tragenden oder dem Drucktisch zugeordneten Gehäuse angeordnet ist. Gemäß einer ersten Ausführungsform ist somit die Transporteinrichtung an der Druckvorrichtung, insbesondere an dem Drucktisch oder dem Druckkopf, angeordnet oder an einem Gehäuse der Druckvorrichtung. Vorzugsweise ist die Transporteinrichtung an der Druckvorrichtung angeordnet. Damit ist die Ansteuerung sowie die Aktuatorik zum Bewegen der Drucksiebe an der Druckvorrichtung selbst vorgesehen. Dies hat den Vorteil, dass beispielsweise ein Siebmagazin auch ausgetauscht werden kann, ohne den Betrieb der Druckvorrichtung zu stören. Auch kann die Druckvorrichtung somit auf unterschiedliche Druckmagazine zugreifen. Hierzu weist das Drucksystem bevorzugt mehrere Druckmagazine auf. Dadurch wird die Vielfalt der unterschiedlichen Drucksiebe erhöht.

Gemäß einer alternativen Ausführungsform der Erfindung ist vorgesehen, dass die Transporteinrichtung an dem Siebmagazin angeordnet ist. Damit ist die Transporteinrichtung mit dem Siebmagazin mitführbar. Die Druckvorrichtung selbst kann dadurch bauraumsparender ausgebildet sein. Darüber hinaus ergibt sich der Vorteil, dass auch eine bestehende Druckvorrichtung nachträglich durch das Siebmagazin mit Transporteinrichtung ergänzt werden kann, um bereits bestehenden Sieb-Druckvorrichtungen einen automatisierten Siebaustausch zu ermöglichen.

Gemäß einer weiteren Ausführungsform der Erfindung ist bevorzugt vorgesehen, dass die Transporteinrichtung zwischen dem Sieblager und dem Drucktisch angeordnet und separat von diesen ausgebildet ist. Damit ist die Transporteinrichtung sowohl losgelöst von der Druckvorrichtung als auch losgelöst von dem Siebmagazin vorhanden und wirkt mit beiden zusammen. Dadurch ist eine einfache Anpassung des Drucksystems an unterschiedliche Bauraumgegebenheiten besonders einfach möglich.

Erfindungsgemäß ist vorgesehen, dass die Transporteinrichtung zumindest einen beweglichen, insbesondere mehrgelenkigen Arm, zum Transportieren jeweils eines Drucksiebs aufweist. Durch den Arm, der als solcher auch als Roboterarm bezeichenbar ist, ist ein einfacher und zielgerichteter Transport des Drucksiebs von dem Siebmagazin zu dem Druckkopf oder von dem Druckkopf von dem Siebmagazin gewährleistet. Insbesondere können durch den beweglichen Arm mehrere Siebmagazine bedient werden. Auch ist es denkbar, mittels der Transporteinrichtung mehrere Druckvorrichtungen für einen Siebaustausch zu bedienen.

Gemäß einer bevorzugten Weiterbildung der Erfindung weist das Siebmagazin mehrere übereinander gestapelt angeordnete Sieblager zur Aufnahme jeweils eines Drucksiebs auf. Die Drucksiebe sind somit in dem Siebmagazin in Drucklagern gehalten. Dadurch, dass die Sieblager übereinanderliegend angeordnet beziehungsweise gestapelt sind, ergibt sich eine vorteilhafte Bauraumausnutzung.

Erfindungsgemäß weist das Siebmagazin zumindest eine Schiebeeinrichtung zum Vorschieben eines Sieblagers oder eines Drucksiebs aus einem der Sieblager auf. Durch die Schiebeeinrichtung ist das Drucksieb zumindest derart weit vorschiebbar, dass die Transporteinrichtung das Drucksieb greifen und der Druckvorrichtung zuführen kann. Durch die Schiebeeinrichtung wird erreicht, dass das ausgewählte Drucksieb einfacher durch die Transporteinrichtung aus dem betroffenen Sieblager entnommen werden kann.

Gemäß einer bevorzugten Weiterbildung der Erfindung weist die Transporteinrichtung eine Hubvorrichtung zum Verfahren der Sieblager in der Höhe auf. Dadurch wird beispielsweise erreicht, dass die Transporteinrichtung das Drucksieb immer aus der gleichen Höhe aus dem Druckmagazin entnimmt, indem die Sieblager entsprechend in der Höhe verschoben werden. Hierdurch sind die in dem Siebmagazin gelagerten Drucksiebe besonders vorteilhaft schützbar. Insbesondere ist dazu vorgesehen, dass das Siebmagazin ein Gehäuse aufweist, das zumindest im Wesentlichen geschlossen ist, und wenigstens eine Entnahmeöffnung aufweist, durch welche das jeweils ausgewählte Drucksieb durch die Schiebeeinrichtung vorschiebbar oder durch die Transporteinrichtung direkt entnehmbar ist. Vorzugsweise ist dabei die Entnahmeöffhung nur geringfügig größer als eines der zu entnehmenden Drucksiebe, sodass der Zugang zu dem Innenraum des Siebmagazins besonders klein ist, wodurch eine Verschmutzung der in dem Sieblager befindlichen Siebe vorteilhaft verhindert ist.

Gemäß einer bevorzugten Weiterbildung ist die Schiebeeinrichtung zum Verschieben eines ausgewählten Drucksiebs von einem der Sieblager in die Siebaufnahme und/oder umgekehrt ausgebildet. Insbesondere in Verbindung mit der zuvor genannten Hubvorrichtung kann dadurch die Transporteinrichtung beispielsweise zuerst ein ausgewähltes Drucksieb auf die Entnahmehöhe verschieben und anschließend mittels der Schiebeeinrichtung direkt der Siebaufnahme der Druckvorrichtung zuführen. Die Druckvorrichtung weist dann bevorzugt ebenfalls eine Schiebeeinrichtung auf, oder die Schiebeeinrichtung der Transporteinrichtung ist auch als Ziehereinrichtung ausgebildet, mittels welcher das in der Siebaufhahme befindliche Drucksieb zurück in das Siebmagazin verbringbar ist.

Weiterhin ist das Siebmagazin bevorzugt an der Druckvorrichtung angeordnet. Dadurch bildet das Siebmagazin ein Bestandteil der Druckvorrichtung und ist insgesamt mit dieser mitführbar. Hierdurch kann eine besonders kompakte Einheit des Drucksystems geschaffen werden.

Alternativ ist das Siebmagazin bevorzugt neben und beabstandet von dem Drucktisch angeordnet. Dadurch bildet es eine eigene Einheit und kann losgelöst von diesem transportiert und montiert werden.

Weiterhin ist bevorzugt vorgesehen, dass die Transporteinrichtung zumindest einen ansteuerbaren Greifer zum Halten und Transportieren eines Drucksiebs, insbesondere an einem freien Ende des Transportarms aufweist. Dadurch ist das jeweilige Drucksieb sicher durch die Transporteinrichtung verbringbar.

Weiterhin ist bevorzugt vorgesehen, dass das Siebmagazin eine Konditionierungseinrichtung zum Klimatisieren beziehungsweise Konditionieren der Drucksiebe in den Sieblagern aufweist. Die Konditionierungseinrichtung sind insbesondere dazu ausgebildet, die Drucksiebe derart zu klimatisieren beziehungsweise konditionieren, dass auf den Drucksieben zurückgebliebene Druckmassen-Reste nicht eintrocknen und bei einem späteren Druckvorgang erneut wiederverwendet werden können. Dadurch ist ein Reinigen eines Drucksiebs nach einem erfolgen Druckvorgang nicht notwendig. Dadurch werden zum einen Material-Ressourcen und zum anderen Zeit bei der Herstellung der dreidimensionalen Struktur gespart. Zu der Konditionierungseinrichtung zählt dann insbesondere auch das zuvor bereits erwähnte Gehäuse des Siebmagazins oder ein zusätzliches Gehäuse, welches sicherstellt, dass das in dem Siebmagazin erzeugte Klima bestehen bleibt. Bevorzugt ist die Entnahmeöffnung des Gehäuses durch ein Schließelement verschließbar, sodass die Konditionierung besonders nachhaltig erfolgt und der Energieaufwand zur Konditionierung gering gehalten wird. Die Konditionierungseinrichtung umfasst dabei bevorzugt zum Klimatisieren eine Klimaanlage mit einer Heiz- und/oder Kühleinrichtung, sowie ein Luftbefeuchter und/oder Entfeuchter, durch welche das für die in dem Druckmagazin befindlichen Siebe optimale Klima einstellbar ist. Weist das Drucksystem mehrere Siebmagazine auf, so können die Siebmagazine gleich oder insbesondere in Bezug auf die Konditionierung auch unterschiedlich ausgebildet sein, sodass beispielsweise ein Siebmagazin für die Konditionierung einer Druckmasse aus einem ersten Material und die Mittel eines anderen Siebmagazins für die Konditionierung einer Druckmasse aus einem anderen Material optimiert ist.

Das Drucksystem weist bevorzugt eine Vielzahl gleicher und/oder unterschiedlicher Drucksiebe auf, die je nach Anwendungsfall durch die Transporteinrichtung ausgewählt und der Druckvorrichtung zugeführt werden können. So können beispielsweise auch zwei identische Drucksiebe vorhanden sein, die jedoch mit unterschiedlichen Materialien für die Druckmasse beaufschlagt werden. Durch die Konditionierung vom Siebmagazin spielt es dabei keine Rolle, ob das jeweilige Drucksieb lange oder nur kurz in dem Sieblager verbleibt, sodass insgesamt ein optimierter Ressourcenverbrauch sowie eine optimierte Zeiteinteilung und eine automatisierte Herstellung dreidimensionaler Strukturen sicher und kostengünstig gewährleistet ist.

Im Folgenden soll die Erfindung anhand der Zeichnung näher erläutert werden. Dazu zeigen
- Figur 1: ein vorteilhaftes Drucksystem in einer vereinfachten Darstellung,
- Figur 2: ein Siebmagazin des Drucksystems in einer vereinfachten Darstellung,
- Figur 3: ein Ausführungsbeispiel des Drucksystems in einer Draufsicht und
- Figur 4: ein weiteres Ausführungsbeispiel des Drucksystems in einer Draufsicht.

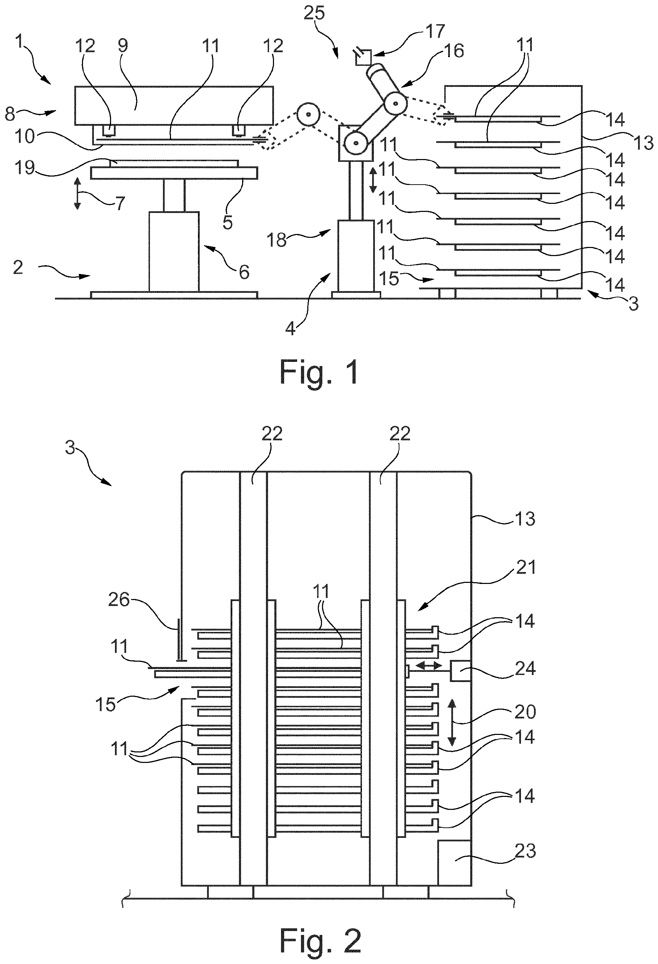

Figur 1 zeigt in einer vereinfachten Seitenansicht ein Drucksystem 1, das eine Druckvorrichtung 2, ein Siebmagazin 3 sowie eine Transporteinrichtung 4 aufweist.

Die Druckvorrichtung 2 weist einen Drucktisch 5 auf, der durch eine Hubvorrichtung 6 in der Höhe verstellbar ist, wie durch einen Doppelpfeil 7 angezeigt. Dem Drucktisch 5 zugeordnet ist ein Druckkopf 8, der eine Rakeleinrichtung 9 aufweist. Zusätzlich zu einem hier nicht näher dargestellten Rakel weist die Rakeleinrichtung 9 eine Siebaufnahme 10 auf, in welcher ein Drucksieb 11 anordenbar ist. Die Siebaufhahme 10 ist dazu beispielsweise als Steckaufnahme ausgebildet, in welche das Drucksieb 11 eingesteckt, insbesondere seitlich beziehungsweise horizontal eingeschoben werden kann, wie in Figur 1 gezeigt. Alternativ ist die Siebaufnahme 10 dazu ausgebildet, dass das Drucksieb 11 in diese eingelegt werden kann. Optional weist die Siebaufnahme 10 ansteuerbare Klemmelemente 12 auf, mittels welcher das Drucksieb 11 in der Siebaufnahme 10 festklemmbar ist, sodass bei einem Druckvorgang, bei welchem das Rakel der Rakeleinrichtung 9 über das Drucksieb 11 bewegt wird, die Ausrichtung und Position des Drucksiebs 11 sich nicht verändert.

Das Siebmagazin 3 weist ein Gehäuse 13 auf und ist vorliegend beabstandet zu der Druckvorrichtung 2 angeordnet. In dem Gehäuse 13 sind mehrere Sieblager 14 übereinanderliegend beziehungsweise übereinander gestapelt angeordnet. Die Sieblager 14 sind beispielsweise wie die Siebaufhahme 10 ausgebildet und weisen optional ebenfalls die Klemmelemente 12 auf. In jedem Sieblager 14 ist ein Drucksieb 11 anordenbar. Das Gehäuse 13 ist im Wesentlichen geschlossen ausgebildet, weist jedoch auf einer insbesondere der Druckvorrichtung 2 zugewandten Seite eine Entnahmeöffnung 15 auf, durch welche ein Drucksieb 11 in das Gehäuse 13 ein oder aus diesem herausgenommen werden kann.

Zum Bewegen der Drucksiebe 11 ist die Transporteinrichtung 4 ausgebildet. Diese weist gemäß dem vorliegenden Ausführungsbeispiel einen mehrgelenkigen Transportarm 16 auf, der an seinem freien Ende einen Greifer 17 trägt. Der Greifer 17 ist beispielsweise pneumatisch oder mechanisch arbeitend ausgebildet, um ein einzelnes Drucksieb 11 zu greifen. Die Transporteinrichtung 4 ist zwischen der Druckvorrichtung 2 und dem Siebmagazin 3 derart angeordnet, dass der Transportarm 16 sowohl ein der Entnahmeöffnung 15 zugeordnetes Drucksieb 11 als auch ein in der Siebaufnahme 10 abgelegtes Drucksieb 11 erreichen kann. Gemäß dem vorliegenden Ausführungsbeispiel erstreckt sich die Entnahmeöffnung 15 nahezu über die gesamte Höhe des Siebmagazins 3, wobei der Transportarm 16 derart ausgebildet ist, dass er jedes Sieblager 14 beziehungsweise das darin befindliche Drucksieb erreichen kann. Optional ist dazu die Transporteinrichtung 4 mit einer eigenen Hubvorrichtung 18 ausgestattet, um die Bewegungsfreiheit des Greifers 17 zu erhöhen. Zusammen mit dem Siebmagazin 3 bildet die Transporteinrichtung 4 eine Siebbereitstellungsvorrichtung 25 für die Druckvorrichtung 2.

Die Funktion des vorteilhaften Drucksystems 1 gestaltet sich wie folgt. Für das Drucken dreidimensional geformter Strukturen wird die Transporteinrichtung 4 zunächst dazu angesteuert, ein bestimmtes Drucksieb 11 aus dem Siebmagazin 3 zu entnehmen und der Siebaufnahme 10 zuzuführen. Das Drucksieb 11 wird in der Siebaufnahme 10 mittels der Klemmmittel 12 arretiert. Anschließend wird das Drucksieb 11 mit einer Druckmasse, insbesondere Druckpaste, aus einem ausgewählten Material beaufschlagt und ein Rakel der Rakeleinrichtung 9 über das Drucksieb 11 geschoben, sodass die Druckmasse durch das Drucksieb 11 hindurch auf den Drucktisch aufgedruckt wird. Dabei ist es denkbar, dass die Druckmasse direkt auf den Drucktisch 5 aufgetragen wird, oder auf ein auf dem Drucktisch 5 angeordnetes Substrat 19, das beispielsweise als Trägersubstrat, oder auch als Leiterplatte, Wafer oder dergleichen ausgebildet sein kann. Das Drucksieb 11 weist dazu bereichsweise Sieböffnungen auf, welche der gewünschten ersten Schicht der zu druckenden Struktur entsprechen. Dabei können viele derartiger Strukturen in das Drucksieb 11 eingearbeitet sein, sodass auch mehreren Bauteile beziehungsweise Strukturelemente/Strukturen gleichzeitig einem Druckvorgang auf dem Substrat 19 und/oder dem Drucktisch 5 nebeneinanderliegend hergestellt werden können.

Nachdem die erste Drucklage erzeugt wurde, wird der Drucktisch 7 beispielsweise nach unten durch die Hubeinrichtung 6 verfahren und ein weiterer Druckvorgang durchgeführt, bei welchem das gleiche Drucksieb 11 genutzt wird, um eine weitere Drucklage zu erzeugen, welche die gleiche Struktur wie die erste Drucklage aufweist. Optional wird anstelle des gleichen Drucksiebs 11 eines der anderen Drucksiebe 11 verwendet. Dazu verbringt der Transportarm 16 das in der Siebaufnahme 10 befindliche Drucksieb 11 in das Siebmagazin 3, nämlich in ein dort freies Sieblager 14. Anschließend entnimmt der Transportarm 16 ein anderes Sieb 11 aus einem anderen Drucklager 14 und führt dieses der Siebaufnahme 10 der Druckvorrichtung 2 zu. Bei einem darauffolgenden Druckvorgang wird dann beispielsweise eine Drucklage erzeugt, welche sich in ihrer Gestalt von der vorherigen Drucklage unterscheidet. Durch dieses Prinzip können mehrere Drucklagen übereinander hergestellt werden, die sich voneinander unterscheiden, wodurch auch komplexe dreidimensionale Strukturen hergestellt werden können. Nach jedem erfolgten Druckvorgang wird der Drucktisch 5 ein Stück weit gesenkt oder alternativ wird der Druckkopf 9 ein Stück weit angehoben.

Während gemäß dem Ausführungsbeispiel von Figur 1 vorgesehen ist, dass die Sieblager 14 fest in dem Gehäuse 13 angeordnet sind, ist gemäß einem weiteren Ausführungsbeispiel, das in Figur 2 in einer vereinfachten Darstellung gezeigt ist, vorgesehen, dass die Sieblager 14 in der Höhe in dem Gehäuse 13 verfahrbar sind, wie durch einen Doppelpfeil 20 gezeigt. Dazu sind die Sieblager 14 mittels einer Hebevorrichtung 21 entlang von Vertikalschienen 22 verschiebbar. In diesem Fall ist die Entnahmeöffnung 15 des Gehäuses 13 etwa mittig in dem Gehäuse 13 angeordnet und derart schmal ausgebildet, dass nur ein Drucksieb 11 durch den Transportarm 16 aus dem Gehäuse 13 entnehmbar beziehungsweise in dieses einfühbar ist. Optional ist die Entnahmeöffnung 15 durch ein Schließelement 26 verschließbar.

Soll ein bestimmtes Drucksieb 11 aus dem Siebmagazin 3 entnommen werden, so werden zunächst die Sieblager 14 derart vertikal bewegt beziehungsweise verschoben, dass dieses Drucksieb 11 der Entnahmeöffnung 15 zugeordnet ist und von dem Transportarm 16 entnommen werden kann. Die dadurch im Wesentlichen geschlossene Ausbildung des Gehäuses 13 des Siebmagazins 3 hat den Vorteil, dass in dem Siebmagazin 3 ein Klima besteht, welches die Vorhaltung der Drucksiebe 11 in dem Siebmagazin 3 verbessert. Optional ist in dem Siebmagazin 3 außerdem eine Konditionierungseinrichtung 23 angeordnet, welche beispielsweise eine Kühleinrichtung oder Heizeinrichtung, einen Luftbefeuchter und/oder einen Luftentfeuchter aufweist, um das Klima in dem Siebmagazin 3 zu beeinflussen. Insbesondere wird das Klima dabei derart beeinflusst, dass auf dem jeweiligen Drucksieb 11 verbliebene Reste der Druckmasse fließfähig gehalten werden. Ein Vertrocknen wird somit verhindert. Dies hat den Vorteil, dass die Drucksiebe 11 auch über einen längeren Zeitraum in dem Siebmagazin 3 vorgehalten werden können, ohne dass sie gereinigt werden müssen. Dies führt dazu, dass Druckmasse auch absichtlich auf dem jeweiligen Drucksieb 11 hinterlassen werden kann. Es muss daher bei dem Befüllen des Drucksiebs 11 weniger darauf geachtet werden, dass eine Maximalmenge verwendet wird, um einen Ausschuss oder Verlust der Druckmasse durch eine anschließende Reinigung zu vermeiden. Stattdessen wird die Druckmasse wiederverwendet, sobald das Drucksieb 11 aus dem Siebmagazin 3 wieder entnommen und einem weiteren Druckvorgang zugrunde gelegt wird. Selbstverständlich ist die Konditioniereinrichtung 23 auch bei dem Ausführungsbeispiel von Figur 1 vorsehbar.

Grundsätzlich kann die Transporteinrichtung 4 vollständig in die Druckvorrichtung 2 oder auch vollständig in das Siebmagazin 3 integriert sein. Optional wird die Transporteinrichtung teilweise von der Druckvorrichtung und teilweise von dem Siebmagazin 3 gebildet. Dazu weist das Siebmagazin 3 beispielsweise eine Schiebeeinrichtung 24 auf, wie sie in Figur 2 beispielhaft gezeigt ist. Die Schiebeeinrichtung 24 ist auf Höhe der Entnahmeöffhung 15 angeordnet und dient dazu, ein auf Höhe der Entnahmeöffnung 15 liegendes Sieblager 14 mit einem Drucksieb 11 oder nur das Drucksieb 11 derart weit in Richtung der Entnahmeöffhung 15 vorzuschieben, dass das Drucksieb 11 über das Gehäuse 13 vorsteht und dadurch besonders einfach von dem Transportarm 16 gegriffen werden kann. Der Transportarm 16 ist dabei beispielsweise an der Druckvorrichtung 2 ausgebildet.

Gemäß einem weiteren Ausführungsbeispiel kann vorgesehen sein, dass die Schiebeeinrichtung 24 derart ausgebildet ist, dass sie das Drucksieb vollständig durch die Entnahmeöffnung 15 hindurch bis in die Siebaufnahme 10 schiebt. Wenn die Entnahmeöffhung 15 und Siebaufnahme 10 miteinander fluchten, ist dies einfach und kostengünstig realisierbar. Zweckmäßigerweise weist dann die Druckvorrichtung 2 eine entsprechende Schiebeeinrichtung auf, welche dazu ausgebildet ist, das Drucksieb 11 nach einem durchgeführten Druckvorgang zurück in das Siebmagazin und das der Entnahmeöffnung 15 zugeordnete Sieblager zu schieben.

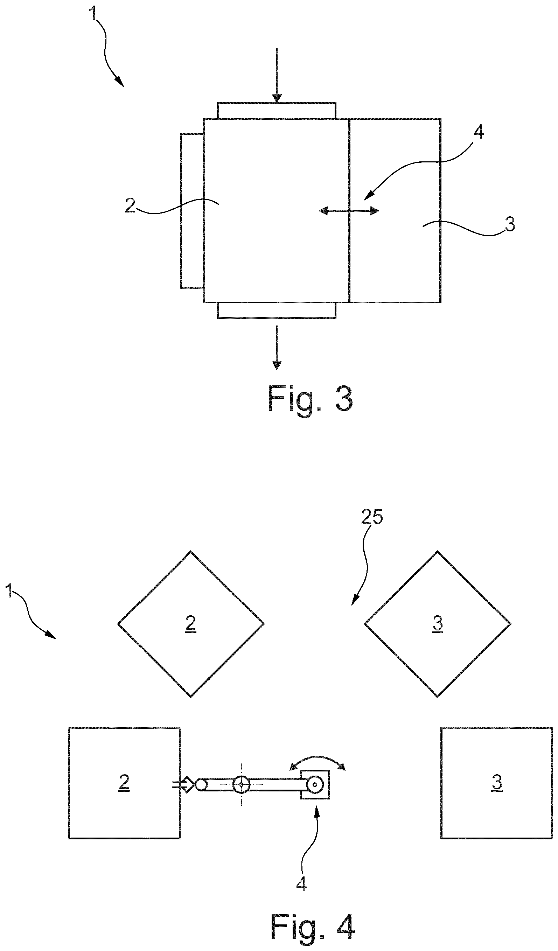

Figur 3 zeigt eine Draufsicht auf ein vorteilhaftes Ausführungsbeispiel des Drucksystems 1. In diesem Fall bilden die Druckvorrichtung 2, das Siebmagazin 3 und die Transporteinrichtung 4 eine Einheit. Dazu ist das Siebmagazin 3 direkt an der Druckvorrichtung 2 angeordnet und die Transporteinrichtung 4 ist an der Druckvorrichtung 2 und/oder dem Siebmagazin 3 angeordnet.

Der Druckvorrichtung können dann beispielsweise Substrate von einer Seite zugeführt und auf der anderen Seite abgeführt werden, und die Drucksiebe von einer weiteren Seite, wie in Figur 3 gezeigt. Hierdurch wird eine besonders kompakte Einheit zur Verfügung gestellt, welche bauraumsparend nutzbar ist.

Figur 4 zeigt ein weiteres Ausführungsbeispiel des Drucksystems 1, bei welchem Transporteinrichtung 4 getrennt von der Druckvorrichtung 2 und dem Siebmagazin 3 ausgebildet ist. Dabei ist vorliegend vorgesehen, dass um die Transporteinrichtung 4 mehrere Druckvorrichtungen 2 und Siebmagazine 3, wie sie zuvor beschrieben wurden, angeordnet sind. Dabei liegen die Druckvorrichtungen 2 und Siebmagazine 3 auf einem Umfang um die Transporteinrichtung 4, sodass der Transportarm 16 alle Siebmagazine 3 und Druckvorrichtungen 2 bedienen kann. Dadurch ist es möglich, mittels einer einzigen Transporteinrichtung 4 mehrere Druckvorrichtungen mit ausgewählten Drucksieben zu bestücken und nicht mehr zum Verwenden der Drucksiebe in ein Siebmagazin 3 zu verbringen, um es dort zu lagern. Dadurch ist eine hochkomplexe dreidimensionale Druckmaschine bereitgestellt, die kurze Durchsetzzeiten mit geringem Ausschuss gewährleistet.

## Patentansprüche

1. Drucksystem (1) zum Drucken dreidimensional geformter Strukturen, insbesondere auf Substraten wie Leiterplatten, Wafer, Solarzellen, Trägersubstraten, Drucktischen, Trägerplatten, Sinterplatten oder dergleichen, mit zumindest einer Druckvorrichtung (2), die einen Druckkopf (8) aufweist, mit einer Rakeleinrichtung (9) und einer der Rakeleinrichtung (9) zugeordneten Siebaufnahme (10) zur Aufnahme eines Drucksiebs (11), und mit einer Siebbereitstellungsvorrichtung (25), die zumindest ein Siebmagazin (3) zur Aufbewahrung mehrerer Drucksiebe (11) und eine Transporteinrichtung (4) zum Transportieren eines Drucksiebs (11) aus dem Siebmagazin (3) zu der Siebaufnahme (10) und von der Siebaufhahme (10) zu dem Siebmagazin (3) aufweist, wobei die Transporteinrichtung (4) zumindest einen beweglichen, insbesondere mehrgelenkigen Transportarm (16) zum Transportieren jeweils eines Drucksiebs (11) aufweist, und dass das Siebmagazin (3) zumindest eine Schiebeeinrichtung (24) zum Vorschieben eines Sieblagers (14) oder eines Drucksiebs (11) aus einem der Sieblager (14) aufweist.

2. Drucksystem nach Anspruch 1, **dadurch gekennzeichnet, dass** der Druckkopf (8) und/oder ein Drucktisch (5) in der Höhe verstellbar sind, um mehrere Drucklagen übereinander mit gleichen oder unterschiedlichen Drucksieben (11) herzustellen.

3. Drucksystem nach einem der vorhergehenden Ansprüche, **dadurch gekennzeichnet, dass** die Transporteinrichtung (4) an der Druckvorrichtung (2), insbesondere an dem Druckkopf (8) oder an dem Drucktisch (5), oder an einem Gehäuse der Druckvorrichtung (2) angeordnet ist.

4. Drucksystem nach einem der vorhergehenden Ansprüche, **dadurch gekennzeichnet, dass** die Transporteinrichtung (4) an dem Siebmagazin (3) angeordnet ist.

5. Drucksystem nach einem der vorhergehenden Ansprüche, **dadurch gekennzeichnet, dass** die Transporteinrichtung (4) zwischen dem Siebmagazin (3) und dem Drucktisch (5) angeordnet und separat von diesen ausgebildet ist.

6. Drucksystem nach einem der vorhergehenden Ansprüche, **dadurch gekennzeichnet, dass** das Siebmagazin (3) mehrere übereinandergestapelt angeordnete Sieblager (14) zur Aufnahme jeweils eines Drucksiebs (11) aufweist.

7. Drucksystem nach einem der vorhergehenden Ansprüche, **dadurch gekennzeichnet, dass** die Transporteinrichtung (4) eine Hubvorrichtung (18,21), insbesondere zum Verfahren der Sieblager (14) oder des Transportarms (16) in der Höhe aufweist.

8. Drucksystem nach einem der vorhergehenden Ansprüche, **dadurch gekennzeichnet, dass** die Schiebeeinrichtung (24) zum Verschieben eines ausgewählten Drucksiebs (11) von einem der Sieblager (14) in die Siebaufnahme (10) und/oder umgekehrt ausgebildet ist.

9. Drucksystem nach einem der vorhergehenden Ansprüche, **dadurch gekennzeichnet, dass** das Siebmagazin (3) an der Druckvorrichtung (2) angeordnet ist.

10. Drucksystem nach einem der vorhergehenden Ansprüche, **dadurch gekennzeichnet, dass** das Siebmagazin (3) neben und beabstandet von der Druckvorrichtung (2) angeordnet ist.

11. Drucksystem nach einem der vorhergehenden Ansprüche, **dadurch gekennzeichnet, dass** die Transporteinrichtung (4) zumindest einen ansteuerbaren Greifer (17) , insbesondere an einem freien Ende des Transportarms (16), zum Halten und Transportieren eines Drucksiebs (11) aufweist.

12. Drucksystem nach einem der vorhergehenden Ansprüche, **dadurch gekennzeichnet, dass** das Siebmagazin (3) eine Konditionierungseinrichtung (23) zum Klimatisieren der Drucksiebe (11) in dem Siebmagazin (3) aufweist.

13. Drucksystem nach einem der vorhergehenden Ansprüche, **gekennzeichnet durch** eine Vielzahl gleicher und/oder unterschiedlicher Drucksiebe (11).

## Claims

1. Printing system (1) for printing three-dimensionally shaped structures, in particular on substrates such as printed circuit boards, wafers, solar cells, carrier substrates, printing tables, carrier plates, sintering plates or the like, comprising at least one printing device (2) which has a print head (8), a scraper device (9) and a screen receptacle (10) which is associated with the scraper device (9) for receiving a printing screen (11), and a screen provisioning device (25) which has at least one screen magazine (3) for storing multiple printing screens (11) and a transport device (4) for transporting a printing screen (11) from the screen magazine (3) to the screen receptacle (10) and from the screen receptacle (10) to the screen magazine (3), whereby the transport device (4) has at least one movable, in particular multi-jointed, transport arm (16) for transporting in each case one printing screen (11) and the screen magazine (3) has at least one sliding device (24) for advancing a screen bearing (14) or a printing screen (11) from one of the screen bearings (14).

2. Printing system according to claim 1, **characterized in that** the printing head (8) and/or a printing table (5) are adjustable in height in order to produce a plurality of printing layers one above the other with identical or different printing screens (11).

3. Printing system according to one of the preceding claims, **characterized in that** the transport device (4) is arranged on the printing device (2), in particular on the print head (8) or on the printing table (5), or on a housing of the printing device (2).

4. Printing system according to one of the preceding claims, **characterized in that** the transport device (4) is arranged on the screen magazine (3).

5. Printing system according to one of the preceding claims, **characterized in that** the transport device (4) is arranged between the screen magazine (3) and the printing table (5) and is embodied separately therefrom.

6. Printing system according to one of the preceding claims, **characterized in that** the screen magazine (3) has multiple screen bearings (14) arranged stacked on top of each other for receiving a printing screen (11) in each case.

7. Printing system according to one of the preceding claims, **characterized in that** the transport device (4) has a lifting device (18, 21), in particular for moving the screen bearings (14) or the transport arm (16) in height.

8. Printing system according to one of the preceding claims, **characterized in that** the sliding device (24) is configured to displace a selected printing screen (11) from one of the screen bearings (14) into the screen receptacle (10) and/or vice versa.

9. Printing system according to one of the preceding claims, **characterized in that** the screen magazine (3) is arranged on the printing device (2).

10. Printing system according to one of the preceding claims, **characterized in that** the screen magazine (3) is arranged next to and at a distance from the printing device (2).

11. Printing system according to one of the preceding claims, **characterized in that** the transport device (4) has at least one controllable gripper (17), in particular at a free end of the transport arm (16), for holding and transporting a printing screen (11).

12. Printing system according to one of the preceding claims, **characterized in that** the screen magazine (3) has a conditioning device (23) for air-conditioning the printing screens (11) in the screen magazine (3).

13. Printing system according to one of the preceding claims, **characterized by** a plurality of identical and/or different printing screens (11).

## Revendications

1. Système d'impression (1) pour imprimer des structures à forme tridimensionnelle, notamment sur des substrats comme cartes de circuits imprimés, wafers, cellules solaires, substrats de support, tables d'impression, plaques de support, plaques pour frittage ou similaire, avec au moins un appareil d'impression (2) ayant une tête d'impression (8), avec un dispositif de raclage (9) et un porte-écran (10) associé au dispositif de raclage (9) pour recevoir un écran d'impression (11), et avec un appareil de mise à disposition d'écran (25) ayant d'au moins un magasin d'écrans (3) pour le stockage de plusieurs écrans d'impression (11), et un dispositif de transport (4) pour le transport d'un écran d'impression (11) hors du magasin d'écrans (3) vers le porte-écran (10) et du porte-écran (10) vers le magasin d'écrans (3), dans lequel le dispositif de transport (4) présente au moins un bras de transport (16) mobile, notamment à plusieurs articulations, pour le transport d'un écran d'impression (11) respectif, et le magasin d'écrans (3) présente au moins un dispositif de poussée (24) pour pousser un logement d'écran (14) ou un écran d'impression (11) hors d'un des logements d'écran (14).

2. Système d'impression selon la revendication 1, **caractérisé en ce que** la tête d'impression (8) et/ou une table d'impression (5) sont réglables dans la hauteur pour réaliser plusieurs couches d'impression l'une au-dessus de l'autre avec des écrans d'impression (11) identiques ou différents.

3. Système d'impression selon l'une quelconque des revendications précédentes, **caractérisé en ce que** le dispositif de transport (4) est arrangé au niveau de l'appareil d'impression (2), notamment de la tête d'impression (8) ou de la table d'impression (5), ou sur un boîtier de l'appareil d'impression (2).

4. Système d'impression selon l'une quelconque des revendications précédentes, **caractérisé en ce que** le dispositif de transport (4) est arrangé au niveau du magasin d'écrans (3).

5. Système d'impression selon l'une quelconque des revendications précédentes, **caractérisé en ce que** le dispositif de transport (4) est arrangé entre le magasin d'écrans (3) et la table d'impression (5), et est formé séparément de ceux-ci.

6. Système d'impression selon l'une quelconque des revendications précédentes, **caractérisé en ce que** le magasin d'écrans (3) présente plusieurs logements d'écran (14) empilés, chacun pour loger respectivement un écran d'impression (11).

7. Système d'impression selon l'une quelconque des revendications précédentes, **caractérisé en ce que** le dispositif de transport (4) présente un appareil de levage (18, 21), notamment pour repositionner les logements d'écran (14) ou du bras de transport (16) dans la hauteur.

8. Système d'impression selon l'une quelconque des revendications précédentes, **caractérisé en ce que** le dispositif de poussée (24) est configuré pour déplacer un écran d'impression (11) sélectionné à partir d'un des logements d'écran (14) dans le porte-écran (10) et/ou inversement.

9. Système d'impression selon l'une quelconque des revendications précédentes, **caractérisé en ce que** le magasin d'écrans (3) est arrangé au niveau de l'appareil d'impression (2).

10. Système d'impression selon l'une quelconque des revendications précédentes, **caractérisé en ce que** le magasin d'écrans (3) est arrangé à côté de et espacé de l'appareil d'impression (2).

11. Système d'impression selon l'une quelconque des revendications précédentes, **caractérisé en ce que** le dispositif de transport (4) présente au moins un préhenseur (17) contrôlable, notamment à une extrémité libre du bras de transport (16), pour tenir et transporter un écran d'impression (11).

12. Système d'impression selon l'une quelconque des revendications précédentes, **caractérisé en ce que** le magasin d'écrans (3) présente un dispositif de conditionnement (23) pour climatiser les écrans d'impression (11) dans le magasin d'écrans (3).

13. Système d'impression selon l'une quelconque des revendications précédentes, **caractérisé par** une pluralité des écrans d'impression (11) identiques ou différents.
